# EUROPEAN PATENT SPECIFICATION

(11) **EP 2 779 124 B1**
(45) Date of publication and mention of the grant of the patent: **09.11.2022**
(21) Application number: 14158228.8
(22) Date of filing: 07.03.2014
(51) Int. Cl.: G08B 5/36, G08B 7/06, G08B 17/00, G08B 25/14

(54) **Thermal event detection and notification system**
Thermische Ereigniserkennung und Benachrichtigungssystem
Détection d'événement thermique et système de notification

(30) Priority: 14.03.2013 GB 201304595
(43) Date of publication of application: 17.09.2014
(73) Proprietor: Kidde Technologies, Inc., Wilson, NC 27896 (US)
(72) Inventor: Rennie, Paul Alan, Bracknell, Berkshire RG12 0TS (GB)
(74) Representative: Dehns

(56) References cited:
- EP-A1- 2 256 707
- WO-A1-2012/000523
- WO-A1-2013/005122
- WO-A2-2005/069240
- WO-A2-2008/103583
- CH-A5- 696 048
- GB-A- 2 214 681
- GB-A- 2 215 105
- GB-A- 2 286 474
- US-A1- 2003 234 725
- US-A1- 2005 128 070
- US-A1- 2007 069 882
- US-A1- 2007 132 575
- US-A1- 2009 045 937
- US-A1- 2010 245 083
- US-A1- 2010 265 089
- US-A1- 2012 038 479

## Description

### FIELD OF TECHNOLOGY

The systems described herein are for detecting and notifying a person of a thermal event, such as a fire. The systems described herein are for being used in an aircraft.

### BACKGROUND

At present, when a fire is detected in an aircraft, for example, by a passenger seeing or smelling a fire, or smoke, a hand extinguisher is used to suppress the fire. Currently, flight attendants in an aircraft follow guidelines in the event of a fire or overheat situation. Hidden fires may occur in areas that are not visible or relatively inaccessible. In such situations smoke or fumes may be produced in one area but may be seen emanating from an aperture, or gap into the cabin some distance away. The guidelines state that the flight attendants may need to locate hotspots that are indicative of the location of a fire, by feeling along cabin surfaces with the back of the hands. Fire-extinguishing agent is then directed onto the fire via ventilation holes in the panels, if present, or the panels may need to be removed or cut to provide local access.

Distributed temperature sensors, such as fibre optics have also been used to detect fires in aircraft. Such distributed temperatures are capable of providing information on the position of a temperature excursion. US 2005/0089081 A1 describes a method for detecting and signalling the existence of overheating conditions and fires in an aircraft, such as in the event of a rupture or leak of the pipe system that carries the hot bleed air from the aircraft engines to the end user devices such as air conditioning packs. The temperature increase and its spatial location are detected by means of a sensor comprising a fibre optic cable and the corresponding sensor signal is provided to a computer for evaluation. This information can be indicated to the flight crew or maintenance personnel by a corresponding display or read-out from the computer.

US 5,467,942 describes a high accuracy light radar, fibre optic temperature sensing system for use in an aircraft such as a helicopter. An optical sensing system simultaneously obtains absolute temperature measurements from various locations in the aircraft while measuring the position of one or more displaceable elements.

A plurality of position values associated with respective positions of the displaceable objects and temperature values associated with the temperatures at the plurality of locations are then outputted to the flight controller which then processes this information and outputs appropriate commands to control the actuators of the aircraft. US 2003/234725 A1 describes an intelligent building alarm for monitoring and evaluating hazardous situations. US 2007/069882 A1 describes an intelligent exit sign. US 2012/038479 A1 describes an illumination system comprising a plurality of illumination devices. US 2010/265089 A1 describes a light system for identifying a target location for emergency vehicles. GB 2 286 474 A discloses an evacuation system for an aircraft, wherein the system controls visual lights to indicate both the direction towards a safe exit and the direction towards an hazard.

### SUMMARY

The invention is defined by a thermal event detection and notification system for use in an aircraft as claimed in claim 1. Preferred embodiments are set out in the dependent claims.

Any type of sensor that is capable of detecting a thermal event may be used. In some examples, the plurality of sensors may be fibre optical thermal sensors, such as distributed sensors, including Rayleigh, Raman or Brillouin sensors, or Quasi distributed sensors such as Fibre Bragg Grating sensors. Such sensors may detect smoke, fire, heat, flame, and/or carbon monoxide.

The systems described herein will now be described with reference to the drawings.

### DRAWINGS

Figure 1 depicts a cross-sectional view of an aircraft, showing an example of the sensing means that may be used in the systems described herein.
Figure 2 depicts an example of a system as described herein.

### DETAILED DESCRIPTION

The term 'thermal event' as described herein refers to any increase in temperature. Such increases in temperature may, for example, result in smoke, fire, heat, flame, and/or the release of carbon monoxide, or other chemical, such as those produced when an aircraft wiring harness or electrical system overheats or catches fire.

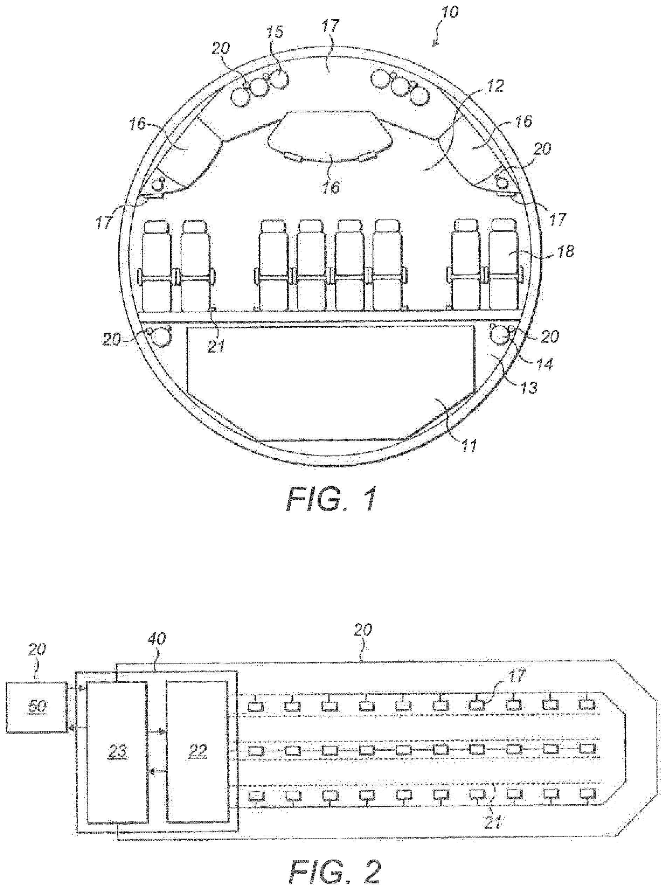

A cross-sectional view of an aircraft, or aeroplane, 10, within which the systems described herein can be used, is shown in figure 1. As can be seen in the figure, a typical aircraft, 10, may comprise seats, 18, as well as features such as stowage bins, 16, and passenger service unit modules, 17, such as those described in US 6,393,343 B1. Such passenger service unit modules, 17, may be connected through data buses to an aircraft cabin central control for controlling and monitoring cabin lighting systems, a captain public address system, displays, keyboards, temperature sensors and air circulation sensors, timers, counters, switches etc.

The aircraft may also comprise a cargo compartment, 11, and an aircraft cabin, 12. The aircraft cabin, 12, may further comprise emergency floor lighting, 21, to direct the passengers to the emergency exits in the event of an emergency.

Many areas in an aircraft are unprotected by fire detection and suppression systems and rely on passengers and crew to identify smoke by sight, smell or sound, followed by the use of hand extinguishers to suppress the fire. The development of an odour, or smoke can take some time, however, before it can be detected. This is particularly dangerous if the fire or overheat event is in a hidden area in an aircraft.

As can be seen in figure 1, for example, a cheek area, 13, is provided underneath the aircraft cabin, 12, and typically contains wire bundles, hydraulic lines and other electrical components, 14. The over head area within the aircraft cabin, 12, also comprises a crown space, 17, which typically contains components of the aircraft's entertainment system, wire bundles, control cables, air-conditioning systems, passenger emergency oxygen system and other systems, 15. These areas containing electrical components may therefore be susceptible to fires, and since the location of the fire would be hidden behind a panel, difficult to locate and also access in order to fight them. The consequence of such a delay may be that the fire becomes non-survivable before the aircraft has an opportunity to land. Such fires are normally extinguished by the application of suppressant from a handheld extinguisher.

Although temperature sensing systems have previously been described for use in an aircraft, such systems do not provide an accurate or user-friendly means of indicating the exact location of a thermal event such as a fire or overheat event. The thermal event detection and notification systems described herein are not only able to detect the location of a thermal event such as a fire or overheat event, but are also able to physically alert and direct a person to the exact location of the thermal event. This is achieved due to the fact that the system is configured to provide an indication of the location of the detected thermal event, at its actual location.

More specifically, the systems described herein have sensing means, (described later) which are distributed within an area of an aircraft. These sensing means are configured to sense and detect a thermal event at a plurality of locations within the aircraft. The system also has means for providing an indication of the location of this detected thermal event, and this indication means comprises a plurality of location indicating output means which are also distributed at a plurality of locations within the area. The control unit comprises also means for determining which of the plurality of these location indicating output means is or are located closest to the detected thermal event location. The output means are then controlled so that the output or outputs produced by the output means that is or are closest to the location of the detected thermal event are not the same as the outputs produced elsewhere. In this way, the indication of the location of the thermal event is provided at the actual location of the thermal event.

Due to this, the people dealing with the thermal event in order to bring it under control can be alerted to and directed straight to the location that needs attention, thereby reducing further damage to the aircraft and/or reducing the possibility of injury to the people within the aircraft.

In at least some of the examples described herein, the system may be further integrated with, or communicate with, the intelligent, addressable lighting, audio or entertainment systems that are standard in contemporary aircraft.

The indicating means comprises the existing cabin light system of an aircraft, and the location indicating output means are therefore the plurality of individual cabin lights that are distributed at a plurality of locations within the aircraft cabin, the output being light. The system is configured to cause those emergency exit floor lights, 21, service call lights, or reading lamps that are closest to the detected fire or overheat event switch on, or to flash and/or change in colour, whilst the remaining lights within the aircraft cabin react differently.

The plurality of lights are configured such that the light or lights that are closest to the detected thermal event appear visually different to those that are not closest to the detected thermal event.

The lights are configured, in response to instructions from the control unit, to provide a first level of illumination at the location at which the thermal event has been detected, and for the lights that are not in this location to conversely provide a second, different level of illumination. For example, the light or lights closest to the location of the detected thermal event may be lit while the others are not, and vice versa. The lights may alternatively be dimmed at different levels. This thereby provides a visual indication of the thermal event at the actual location of the thermal event.

In addition, the plurality of lights may be capable of being illuminated in a plurality of colours and may further be configured, in response to instructions from the control means, to be illuminated in a first colour at the determined thermal event location, and a second, different colour, at a second location that is different to the location of the thermal event. This thereby also provides a visual indication of the thermal event at the actual location of the thermal event. For example, the light, or lights that are positioned closest to the detected thermal event may be lit up as red, whereas the remaining lights that are not close to the detected thermal event may turn green, or some other colour, or may remain switched off completely. Alternatively, the lights at the detected thermal event location may be lit up red, (or some other colour), whilst the remaining lights are illuminated as normal, without changing colour.

In addition, the plurality of lights may be configured, in response to instructions received from the control means, to flash at a first rate at the location of the thermal event, and at a second different rate at a location that is different to this. Alternatively, the lights may flash at the location of the thermal event and not in the other location, or vice versa.

In addition, the location of the event may be indicated to the flight attendants or passengers via an illuminated indicator, or light, that has been specifically positioned in the aircraft for this purpose. For example, a plurality of additional lights could be provided on the cabin wall and could be illuminated to indicate the location of a detected thermal event that is found in the cheek area, 13, of an aircraft, 10.

These systems are therefore able to provide visual indications, at the actual location of the thermal event, even if the fire or overheat is hidden behind a panel.

In addition, the means for providing an indication of the location of the thermal event may comprise an audio visual entertainment system. The plurality of location indicating output means may therefore comprise the plurality of individual audio visual systems that are already provided in aircraft, in the form of seat back or overhead entertainment systems (not shown in the figures). In such a situation, the entertainment system located closest to the detected thermal event may provide a signal such as a message upon the screen and/or an audio message, thereby indicating that the detected thermal event is located in the vicinity. The message may provide further information regarding the exact location of the detected event.

In addition, the indication of the location of the thermal event may comprise an audible indication transmitted through one or more of the speakers that is or are positioned closest to, or adjacent to, the detected thermal event. Such speakers are provided as standard in aircraft and are normally used for passenger announcements etc. The audible indication, or signal, may be a loud noise, like an alarm, or alternatively, may be a specific message informing the person or people in that location that there is a fire in the immediate vicinity. In this example, the plurality of speakers are therefore configured such that the speaker or speakers closest to the detected thermal event provide a different audio output to those that are not closest to the detected thermal event.

The thermal event detection and notification systems described herein further comprise sensing means, 20, as shown in figure 2. Any type of sensing means that is capable of detecting a thermal event may be used. In some examples, however, the sensing means may comprise a fibre optical thermal sensor, such as distributed sensors, 20, i.e. Rayleigh, Raman or Brillouin sensors, or Quasi distributed sensors such as Fibre Bragg Grating sensors. Such sensors may detect smoke, fire, heat, flame, and/or carbon monoxide.

The sensing means, 20, is positioned or distributed within the aircraft so that it is capable of detecting a fire or overheat in a plurality of locations within the aircraft. For example, the sensing means may comprise an optical fibre cable that may extend along the length, or around the perimeter of the aircraft cabin or cheek area of the aircraft. The sensing means may alternatively, or additionally, comprises a plurality of discrete sensors that are provided at different locations in the aircraft.

In one example, the sensing means, 20, may be positioned within the cheek area, 13, of the aircraft, 10, and may further be positioned adjacent to, or at least near to, the electrical aircraft system components, 14, see figure 1. The sensing means may also, or alternatively, be positioned in the aircraft cabin, 12, and may further be positioned adjacent to, or at least near to, the electrical aircraft system components, 15, located there. The sensing means may also be positioned in other regions of the aircraft, such as the cockpit, 50, or other regions that may remain hidden from view in normal situations, or that may even be visible.

An example of a system is shown in Figure 2. This shows a simplified schematic view of an aircraft from above, depicting, in particular, some of the features of the systems described herein.

As shown in figure 2, a control unit, 40, is in communication with the sensing means, 20, as well as the location indicating means, 17, 21. In this example the sensing means, 20, is able to provide thermal event detection at a plurality of locations around the entire circumference and length of the aircraft cabin, 12, and/or corresponding cheek area, 13, however, the sensing means can be positioned or distributed anywhere within the aircraft. For example, the system of figure 2 also comprises sensing means, 20, in the cockpit, 50, however, this is also down to choice of location and not necessary. In this example shown in figure 2, the location indicating means comprises at least the emergency exit lights, 21, and the light(s) and/speaker(s) in the passenger service units, 17.

The control unit comprises means, 23, for receiving information from the sensing means, 20, the information being indicative of the thermal event. In other words, when the sensing means detects a thermal event somewhere in the aircraft, information is communicated back to the control unit to confirm this. The control unit, 40, further comprises means to determine, based on this information received from the sensing means, the exact location of the thermal event within the aircraft.

As can be seen in figure 2, the control unit, 40, further comprises location indicating control means, 22, which is in communication with the location indicating means, described above. The location indicating control means, 22, then uses this information regarding the location of the detected thermal event, to control the plurality of location indicating output means within the aircraft, i.e. at least lights provided in the aircraft comprising emergency exit floor lights, in such a way that those location indicating output means that is or are closest to the detected thermal event react differently to those that are not closest to the thermal event, as described above.

This communication between the location indicating control means, 22, and the plurality of location indicating output means, 17, 21, may be achieved via the data bus, as described above, or alternatively, may be wireless.

In use, the control unit, 40, therefore receives information from the sensing means, 20, that a thermal event has been detected and based on that information, determines the location of the detected thermal event. Based on this information regarding the location of the thermal event, the location indicating control means, 22, of the control unit, 40, then communicates with the location indicating means, 17, 21, and controls the functions of the plurality of location indicating output means, (i.e. emergency exit floor lights and optionally the lights and/or speakers of the passenger service units) as described above, so that those closest to the location of the thermal event are activated or modulated in a way that differs to those not closest to the thermal event so that the output means that are closest to the detected thermal event do not produce the same output as those that are not closest to the detected thermal event. This thereby indicates, at the actual location of the detected thermal event, the location of the thermal event.

A graphical user interface (GUI) may additionally be used with the systems described herein, that indicates the location of a fire/overheat event on a schematic of the aircraft, from the distributed sensor spatial data. This would allow the flight attendants to visually identify the location of the overheat or fire event, and thereby react accordingly. The plan may also be zoomed by the use of a touch screen or other input device to show the location of the event in greater detail. Information from other thermal/smoke sensors could obviously be shown on the same display.

As described above, the systems described herein provide significant advantages over known thermal event detection and notification systems in that the system is able to quickly direct cabin crew to the location of even a hidden fire/overheat event and thereby allow hand extinguishers to be deployed more effectively. In situations where the thermal event is hidden and no smoke or flames etc can therefore be seen or heard by a person, this system thereby provides invaluable visual and optionally audible information to the person that is to deal with the fire or overheat event.

This is also advantageous as the system may provide a visual and optionally audible indication of where to power down non-critical systems.

The integration of a system as described herein with the existing lighting, speaker, and/or entertainment systems of an aircraft would also save weight over a discrete system.

## Claims

1. A thermal event detection and notification system for use in an aircraft comprising
sensing means (20) for detecting a thermal event,
a control unit (40) comprising means for receiving information from the sensing means (20), the information being indicative of the detected thermal event said thermal event comprising an increase in temperature, and means for determining, based on said information received, a location of said thermal event,
and further comprising indication means for providing an indication of the location of the detected thermal event responsive to information received from said control unit regarding said location, wherein said indication means is configured to provide said indication of the thermal event location at said thermal event location; and
wherein said sensing means (20) is distributed within an area inside the aircraft and is configured to sense said detected thermal event at a plurality of locations within said area
and wherein said indication means comprises a plurality of location indicating output means (17, 21) distributed at a plurality of locations within said area
and wherein said control unit (40) comprises means for determining which of said plurality of location indicating output means (17, 21) is or are located closest to said detected thermal event location and using said closest location indicating output means (17, 21) to provide said indication of the location of the detected thermal event; and wherein said plurality of location indicating output means (17,21) comprise a plurality of lights within the aircraft cabin, wherein said plurality of lights within the aircraft cabin comprise emergency exit floor lights, and wherein said plurality of lights within the aircraft cabin are configured, in response to said information received from said control means, to provide a first level of illumination for the light(s) located closest to said detected thermal event location, and a second level of illumination, different to the first level, for the remaining light(s) within the aircraft cabin, thereby providing a visual indication of said thermal event at said thermal event location.

2. The system of claims 1 wherein the lights within the aircraft cabin are configured to be illuminated in a plurality of colours and further configured to be illuminated, in response to said information received from said control unit, with a first colour for the light(s) located closest to said detected thermal event location, and with a second colour, different to the first colour, for the remaining light(s) within the aircraft cabin, thereby providing said visual indication of said thermal event at said thermal event location.

3. The system of any of claims 1 or 2 wherein said plurality of lights within the aircraft cabin are configured, in response to the control means, to flash at a first rate for the light(s) located closest to said detected thermal event location, and to not flash at said first rate for the remaining light(s) within the aircraft cabin, thereby providing said visual indication of said thermal event at said thermal event location.

4. The system of any of claims 1 to 3 wherein said plurality of lights within the aircraft cabin are configured, in response to the control means, to flash at a first rate for the remaining light(s) within the aircraft cabin, and to not flash at said first rate for the light(s) located closest to said detected thermal event location, thereby providing said visual indication of said thermal event at said thermal event location.

5. The system of any preceding claim wherein said indication means further comprises means for providing an audible indication at said thermal event location.

6. The system of any preceding claim wherein said indication means comprises an audio visual entertainment system.

7. The system of any preceding claim wherein the system further comprises a graphical user interface that is adapted to provide a graphical illustration of the location of the thermal event.

8. The system of claim 7
wherein the graphical user interface comprises means for receiving a user input.

9. The system of claim 8
wherein the means for receiving said user input comprises a touch screen display for displaying images and receiving user input in response to a user touching the touch screen display.

10. The system of claims 8 or 9
wherein the means for receiving said user input comprises means for receiving a request to perform a zoom operation at a focal point of a target element on said graphical user interface.

11. The system of any of claims 1 to 10, said system being integrated into a lighting/audio visual entertainment system, and/or speaker system of the aircraft.

## Patentansprüche

1. System zur Erkennung eines thermischen Ereignisses und zur Benachrichtigung zur Verwendung in einem Luftfahrzeug, umfassend ein Erfassungsmittel (20) zum Erkennen eines thermischen Ereignisses,
eine Steuereinheit (40), die ein Mittel zum Empfangen von Informationen von dem Erfassungsmittel (20), wobei die Informationen das erkannte thermische Ereignis angeben und das thermische Ereignis einen Temperaturanstieg umfasst, und ein Mittel zum Bestimmen eines Ortes des thermischen Ereignisses basierend auf den empfangenen Informationen umfasst,
und ferner umfassend ein Angabemittel zum Bereitstellen einer Angabe des Ortes des erkannten thermischen Ereignisses als Reaktion auf Informationen, die von der Steuereinheit bezüglich des Ortes empfangen werden,
wobei das Angabemittel dazu konfiguriert ist, die Angabe des Ortes des thermischen Ereignisses an dem Ort des thermischen Ereignisses bereitzustellen; und
wobei das Erfassungsmittel (20) innerhalb eines Bereichs in dem Luftfahrzeug verteilt und dazu konfiguriert ist, das erkannte thermische Ereignis an einer Vielzahl von Orten innerhalb des Bereichs zu erfassen,
und wobei das Angabemittel eine Vielzahl von Ausgabemitteln (17, 21) zur Ortsangabe umfasst, die an einer Vielzahl von Orten innerhalb des Bereichs verteilt ist,
und wobei die Steuereinheit (40) ein Mittel zum Bestimmen, welches oder welche der Vielzahl von Ausgabemitteln (17, 21) zur Ortsangabe sich am nächsten zu dem erkannten Ort des thermischen Ereignisses befindet oder befinden, und zum Verwenden des Ausgabemittels (17, 21) zur Ortsangabe, das sich am nächsten befindet, um die Angabe des Ortes des erkannten thermischen Ereignisses bereitzustellen, umfasst; und
wobei die Vielzahl von Ausgabemitteln (17, 21) zur Ortsangabe eine Vielzahl von Leuchten innerhalb der Luftfahrzeugkabine umfasst, wobei die Vielzahl von Leuchten innerhalb der Luftfahrzeugkabine Bodenleuchten für Notausgänge umfasst,
und wobei die Vielzahl von Leuchten innerhalb der Luftfahrzeugkabine dazu konfiguriert ist, als Reaktion auf die von dem Steuermittel empfangenen Informationen der/den Leuchte(n), die sich am nächsten zu dem Ort des erkannten thermischen Ereignisses befindet/befinden, ein erstes Aufleuchtungsniveau und der/den übrigen Leuchte(n) innerhalb der Luftfahrzeugkabine ein zweites Aufleuchtungsniveau, das sich von dem ersten Niveau unterscheidet, bereitzustellen, wodurch an dem Ort des thermischen Ereignisses eine visuelle Angabe des thermisches Ereignisses bereitgestellt wird.

2. System nach Anspruch 1, wobei die Leuchten innerhalb der Luftfahrzeugkabine dazu konfiguriert sind, in einer Vielzahl von Farben aufzuleuchten, und ferner so konfiguriert sind, dass als Reaktion auf die von der Steuereinheit empfangenen Informationen die Leuchte (n), die sich am nächsten zu dem erkannten Ort des thermischen Ereignisses befindet/befinden, mit einer ersten Farbe
und die übrige(n) Leuchte(n) innerhalb der Luftfahrzeugkabine mit einer zweiten Farbe, die sich von der ersten Farbe unterscheidet, aufleuchtet/aufleuchten,
wodurch die visuelle Angabe des thermischen Ereignisses an dem Ort des thermischen Ereignisses bereitgestellt wird.

3. System nach einem der Ansprüche 1 oder 2, wobei die Vielzahl von Leuchten innerhalb der Luftfahrzeugkabine so konfiguriert ist, dass als Reaktion auf das Steuermittel die Leuchte(n), die sich am nächsten zu dem erkannten Ort des thermischen Ereignisses befindet/befinden, mit einer erste Rate blinkt/blinken,
und die übrige(n) Leuchte(n) innerhalb der Luftfahrzeugkabine nicht mit der ersten Rate blinkt/blinken, wodurch die visuelle Angabe des thermischen Ereignisses an dem Ort des thermischen Ereignisses bereitgestellt wird.

4. System nach einem der Ansprüche 1 bis 3, wobei die Vielzahl von Leuchten innerhalb der Luftfahrzeugkabine so konfiguriert ist, dass als Reaktion auf das Steuermittel die übrige(n) Leuchte(n) innerhalb der Luftfahrzeugkabine mit einer ersten Rate blinkt/blinken, und die Leuchte(n), die sich am nächsten zu dem erkannten Ort des thermischen Ereignisses befindet/befinden, nicht mit der ersten Rate blinkt/blinken, wodurch die visuelle Angabe des thermischen Ereignisses an dem Ort des thermischen Ereignisses bereitgestellt wird.

5. System nach einem vorhergehenden Anspruch, wobei das Angabemittel ferner ein Mittel zum Bereitstellen einer hörbaren Angabe an dem Ort des thermischen Ereignisses umfasst.

6. System nach einem vorhergehenden Anspruch, wobei das Angabemittel ein audiovisuelles Unterhaltungssystem umfasst.

7. System nach einem vorhergehenden Anspruch,
wobei das System ferner eine grafische Benutzerschnittstelle umfasst, die dazu ausgelegt ist, eine grafische Veranschaulichung des Ortes des thermischen Ereignisses bereitzustellen.

8. System nach Anspruch 7,
wobei die grafische Benutzerschnittstelle ein Mittel zum Empfangen einer Benutzereingabe umfasst.

9. System nach Anspruch 8,
wobei das Mittel zum Empfangen der Benutzereingabe eine Touchscreen-Anzeige zum Anzeigen von Bildern und zum Empfangen der Benutzereingabe als Reaktion darauf, dass ein Benutzer die Touchscreen-Anzeige berührt, umfasst.

10. System nach Anspruch 8 oder 9,
wobei das Mittel zum Empfangen der Benutzereingabe ein Mittel zum Empfangen einer Anforderung zum Durchführen eines Zoomvorgangs an einem Fokuspunkt eines Zielelements auf der grafischen Benutzerschnittstelle umfasst.

11. System nach einem der Ansprüche 1 bis 10, wobei das System in ein Beleuchtungs-/audiovisuelles Unterhaltungssystem und/oder ein Lautsprechersystem des Luftfahrzeugs integriert ist.

## Revendications

1. Système de détection et de notification d'événement thermique destiné à être utilisé dans un aéronef comprenant
un moyen de détection (20) pour détecter un événement thermique, une unité de commande (40) comprenant un moyen pour recevoir des informations depuis le moyen de détection (20), les informations indiquant l'événement thermique détecté, ledit événement thermique comprenant une augmentation de température, et un moyen pour déterminer, sur la base desdites informations reçues, un emplacement dudit événement thermique,
et comprenant en outre un moyen d'indication pour fournir une indication de l'emplacement de l'événement thermique détecté en réponse à des informations reçues depuis ladite unité de commande concernant ledit emplacement,
dans lequel ledit moyen d'indication est configuré pour fournir ladite indication de l'emplacement d'événement thermique au niveau dudit emplacement d'événement thermique ; et
dans lequel ledit moyen de détection (20) est réparti à l'intérieur d'une zone à l'intérieur de l'aéronef et est configuré pour détecter ledit événement thermique détecté au niveau d'une pluralité d'emplacements à l'intérieur de ladite zone
et dans lequel ledit moyen d'indication comprend une pluralité de moyens de sortie d'indication d'emplacement (17, 21) répartis au niveau d'une pluralité d'emplacements à l'intérieur de ladite zone
et dans lequel ladite unité de commande (40) comprend un moyen pour déterminer lequel de ladite pluralité de moyens de sortie d'indication d'emplacement (17, 21) est ou sont situés le plus proche dudit emplacement d'événement thermique détecté et pour utiliser lesdits moyens de sortie d'indication d'emplacement le plus proche (17, 21) afin de fournir ladite indication de l'emplacement de l'événement thermique détecté ; et
dans lequel ladite pluralité de moyens de sortie d'indication d'emplacement (17, 21) comprennent une pluralité de lumières à l'intérieur de la cabine d'aéronef, dans lequel ladite pluralité de lumières à l'intérieur de la cabine d'aéronef comprennent des lumières de plancher de sortie de secours,
et dans lequel ladite pluralité de lumières à l'intérieur de la cabine d'aéronef sont configurées, en réponse auxdites informations reçues depuis ledit moyen de commande, pour fournir un premier niveau d'éclairage pour la ou les lumières situées le plus proche dudit emplacement d'événement thermique détecté, et un second niveau d'éclairage, différent du premier niveau, pour la ou les lumières restantes à l'intérieur de la cabine d'aéronef, fournissant ainsi une indication visuelle dudit événement thermique au niveau dudit emplacement d'événement thermique.

2. Système selon la revendication 1, dans lequel les lumières à l'intérieur de la cabine d'aéronef sont configurées pour être éclairées dans une pluralité de couleurs et en outre configurées pour être éclairées, en réponse auxdites informations reçues depuis ladite unité de commande, avec une première couleur pour la ou les lumières situées le plus proche dudit emplacement d'événement thermique détecté, et avec une seconde couleur, différente de la première couleur, pour la ou les lumières restantes à l'intérieur de la cabine d'aéronef, fournissant ainsi ladite indication visuelle dudit événement thermique au niveau dudit emplacement d'événement thermique.

3. Système selon l'une quelconque des revendications 1 ou 2, dans lequel ladite pluralité de lumières à l'intérieur de la cabine d'aéronef sont configurées, en réponse au moyen de commande, pour clignoter à une première vitesse pour la ou les lumières situées le plus proche dudit emplacement d'événement thermique détecté, et pour ne pas clignoter à ladite première vitesse pour la ou les lumières restantes à l'intérieur de la cabine d'aéronef, fournissant ainsi ladite indication visuelle dudit événement thermique au niveau dudit emplacement d'événement thermique.

4. Système selon l'une quelconque des revendications 1 à 3, dans lequel ladite pluralité de lumières à l'intérieur de la cabine d'aéronef sont configurées, en réponse au moyen de commande, pour clignoter à une première vitesse pour la ou les lumières restantes à l'intérieur de la cabine d'aéronef, et pour ne pas clignoter à ladite première vitesse pour la ou les lumières situées le plus proche dudit emplacement d'événement thermique détecté, fournissant ainsi ladite indication visuelle dudit événement thermique au niveau dudit emplacement d'événement thermique.

5. Système selon une quelconque revendication précédente, dans lequel ledit moyen d'indication comprend en outre un moyen pour fournir une indication audible au niveau dudit emplacement d'événement thermique.

6. Système selon une quelconque revendication précédente, dans lequel ledit moyen d'indication comprend un système de divertissement audiovisuel.

7. Système selon une quelconque revendication précédente, dans lequel le système comprend en outre une interface utilisateur graphique qui est conçue pour fournir une illustration graphique de l'emplacement de l'événement thermique.

8. Système selon la revendication 7, dans lequel l'interface utilisateur graphique comprend un moyen pour recevoir une entrée utilisateur.

9. Système selon la revendication 8, dans lequel le moyen pour recevoir ladite entrée utilisateur comprend un affichage à écran tactile pour afficher des images et recevoir une entrée utilisateur en réponse à un utilisateur touchant l'affichage à écran tactile.

10. Système selon les revendications 8 ou 9, dans lequel le moyen pour recevoir ladite entrée utilisateur comprend un moyen pour recevoir une requête afin d'effectuer une opération de zoom au niveau d'un point focal d'un élément cible sur ladite interface utilisateur graphique.

11. Système selon l'une quelconque des revendications 1 à 10, ledit système étant intégré dans un système d'éclairage/de divertissement audiovisuel, et/ou un système de haut-parleurs de l'aéronef.
